# FASCICULE DE BREVET EUROPEEN

(11) **EP 4 477 383 B1**
(45) Date de publication et mention de la délivrance du brevet: **03.12.2025**
(21) Numéro de dépôt: 24177708.5
(22) Date de dépôt: 23.05.2024
(51) Int. Cl.: B29C 49/42, B29C 49/64, B29C 49/68, B29C 49/78, B29C 49/06, B29K 67/00, B29L 31/00

(54) **UNITÉ DE TRAITEMENT THERMIQUE DE PRÉFORMES COMPRENANT UN SYSTÈME DE SÉCURITÉ CONTRE L' EXPOSITION À UN RAYONNEMENT**
EINHEIT ZUR WÄRMEBEHANDLUNG VON VORFORMLINGEN MIT EINEM SICHERHEITSSYSTEM GEGEN BESTRAHLUNG
UNIT FOR THERMAL TREATMENT OF PREFORMS COMPRISING A SYSTEM FOR PROTECTION AGAINST RADIATION EXPOSURE

(30) Priorité: 12.06.2023 FR 2305912
(43) Date de publication de la demande: 18.12.2024
(73) Titulaire: Sidel Participations, 76930 Octeville Sur Mer (FR)
(72) Inventeur: FEUILLOLEY, Guy, 76930 OCTEVILLE-SUR-MER (FR); DANEL, Laurent, 76930 OCTEVILLE-SUR-MER (FR); LE PECHOUR, Anthony, 76930 OCTEVILLE-SUR-MER (FR); DERRIEN, Mikael, 76930 OCTEVILLE-SUR-MER (FR)
(74) Mandataire: Sidel Group

(56) Documents cités:
- WO-A1-2020/115575
- DE-A1- 102021 108 790
- FR-A1- 3 124 030
- US-A1- 2011 256 493
- US-B2- 8 921 808

## Description

La présente invention concerne une unité de traitement thermique de préformes d'une installation de fabrication récipients, du type comprenant une enceinte au sein de laquelle défilent les préformes selon un trajet rédéfini et au moins une paroi émettrice comprenant au moins un élément d'émission d'un rayonnement électromagnétique monochromatique ou pseudo-monochromatique agencé pour émettre ledit rayonnement vers les préformes circulant dans l'enceinte, ladite enceinte étant fermée au moins en partie par au moins une paroi amovible agencée pour empêcher ledit rayonnement de traverser ladite paroi amovible vers l'extérieur de l'enceinte, ladite paroi amovible étant disposée dans une zone prédéfinie de l'enceinte.

Une telle unité de traitement thermique, ou four, est généralement équipée d'une pluralité d'éléments de chauffage agencés pour émettre de la chaleur en direction de préformes en matériau synthétique défilant dans l'unité de traitement thermique afin d'appliquer un profil de chauffage sur ces préformes et permettre leur déformation ultérieure par exemple par étirage soufflage de sorte à réaliser des récipients à partir des préformes.

L'utilisation d'éléments d'émission d'un rayonnement électromagnétique monochromatique ou pseudo-monochromatique, ou émetteurs laser, en tant qu'éléments de chauffage est particulièrement bénéfique dans une telle unité de traitement thermique car de tels éléments offrent un rendement et une précision optique supérieurs à d'autres types d'éléments de chauffage, tels que des lampes à incandescence halogène, ce qui permet de réaliser une chauffe plus rapide et plus sélective des préformes.

Cependant, l'utilisation de tels émetteurs laser doit s'accompagner de précautions particulières en raison de la dangerosité du rayonnement émis pour les opérateurs évoluant autour de l'unité de traitement thermique. En effet, le rayonnement est émis dans le domaine de l'infrarouge et est invisible à l'œil nu et peut ainsi facilement engendrer des blessures graves non seulement pour les yeux, mais également pour la peau, des opérateurs qui ne sont pas nécessairement conscients de leur exposition à ce rayonnement.

Afin d'empêcher cette exposition, il est prévu de confiner autant que possible l'enceinte au sein de laquelle défilent les préformes pour limiter au maximum les fuites de rayonnement en dehors de l'enceinte. Pour ce faire, il est par exemple prévu de fermer l'enceinte avec des parois agencées pour bloquer le passage du rayonnement, ces parois encloisonnant l'enceinte et les éléments d'émission en laissant au moins une ouverture pour l'entrée et la sortie des préformes dans et hors de l'enceinte. Au moins certaines de ces parois sont amovibles afin de laisser un accès à l'enceinte pour des opérations de manutention et autre lorsque l'unité de traitement thermique est à l'arrêt et que les éléments d'émission n'émettent pas de rayonnement.

Avant toute mise en service de l'unité de traitement thermique, il convient donc de s'assurer de la présence de toutes les parois amovibles afin d'éviter les fuites de rayonnement à l'endroit de ces parois. Un opérateur est généralement chargé de vérifier que toutes les parois amovibles sont bien présentes avant d'autoriser le démarrage de l'unité de traitement thermique. Cependant, une telle vérification est sujette à erreurs et à oublis de la part de l'opérateur. En alternative, il peut être prévu de détecter physiquement la présence des parois en équipant l'unité de traitement thermique de capteurs de proximité, par exemple du type optique, magnétique, inductif ou mécanique entre chaque paroi amovible et le support de ces parois. De tels capteurs sont par exemple agencés pour empêcher le démarrage de l'unité de traitement thermique et/ou pour émettre une alarme en cas d'absence de l'une des parois. Cependant, un tel équipement est particulièrement coûteux, d'installation et d'entretien fastidieux car il nécessite autant de capteurs qu'il y a de parois amovibles.

L'un des buts de l'invention est de pallier ces inconvénients en proposant une unité de traitement thermique dont l'enceinte est confinée de façon sûre et facilement vérifiable.

A cet effet, l'invention concerne une unité de traitement thermique du type précité, comprenant en outre au moins un système de sécurité comprenant au moins un dispositif d'acquisition d'images tourné vers ladite zone prédéfinie et au moins un dispositif de traitement des images acquises par ledit dispositif d'acquisition d'images, ledit dispositif d'acquisition d'images étant agencé pour acquérir au moins une image de ladite zone prédéfinie et le dispositif de traitement étant configuré pour détecter la présence ou non de ladite paroi amovible dans ladite image acquise.

En utilisant un dispositif d'acquisition d'images pour déterminer la présence ou non d'une paroi amovible, il est possible de vérifier de façon simple et sans installation particulière sur l'enceinte en elle-même si l'unité de traitement thermique peut être utilisée de façon sûre et sans risque. En outre, un même dispositif d'acquisition d'images peut être utilisé pour vérifier la présence d'un grand nombre de parois amovibles à partir d'une seule image acquise. En choisissant un dispositif d'acquisition d'images adapté, il est également possible de vérifier si il y a une fuite de rayonnement hors de l'enceinte à partir de l'image acquise, ce qui permet de s'assurer que le confinement de l'enceinte est correctement réalisé en présence de toutes les parois amovibles prévues.

L'unité de traitement thermique selon l'invention peut en outre comprendre une ou plusieurs des caractéristiques suivantes, considérées seules ou selon toute combinaison techniquement envisageable :
- la paroi amovible comprend au moins un élément d'identification, le dispositif d'acquisition d'images étant agencé pour acquérir au moins une image dudit élément d'identification, ledit dispositif de traitement étant configuré pour détecter la présence dudit élément d'identification dans ladite image acquise ;
- le dispositif d'acquisition d'images comprend au moins une caméra captant des images au moins dans le domaine du visible, ladite caméra étant orientée de sorte qu'au moins la zone prédéfinie s'étend dans le cadre de ladite caméra ;
- l'enceinte est fermée au moins en partie par une pluralité de parois amovibles adjacentes, chaque paroi amovible s'étendant dans une zone prédéfinie, le dispositif d'acquisition d'images étant agencé pour acquérir au moins une image de l'ensemble desdites zones prédéfinies de sorte que le dispositif de traitement détecte la présence ou non de tous lesdites parois amovibles à partir d'au moins une seule image acquise par ledit dispositif d'acquisition d'images ;
- ledit dispositif d'acquisition d'images acquiert en outre des images dans le domaine du proche infrarouge, les images acquises par ledit dispositif d'acquisition d'images étant aptes à montrer un rayonnement émis dans la zone prédéfinie, le dispositif de traitement étant agencé pour identifier la présence d'une fuite de rayonnement hors de l'enceinte si au moins une image acquise par ledit dispositif d'acquisition d'images montre un rayonnement émis dans la zone prédéfinie ;
- l'unité de traitement thermique comprend en outre au moins une ouverture d'accès à l'enceinte pour le passage des préformes dans ou hors de l'enceinte, au moins une paroi amovible délimitant au moins une partie de l'ouverture ;
- au moins une paroi amovible s'étend en regard d'un élément d'émission selon une direction transversale sensiblement perpendiculaire à la direction longitudinale ;
- l'enceinte est délimitée selon une direction transversale sensiblement perpendiculaire à la direction longitudinale par deux parois émettrices s'étendant de part et d'autre du trajet prédéfini des préformes, chaque paroi émettrice comprenant au moins au moins un élément d'émission d'un rayonnement électromagnétique monochromatique ou pseudo-monochromatique agencé pour émettre ledit rayonnement vers les préformes circulant dans l'enceinte, au moins une paroi amovible s'étendant dans une zone prédéfinie sur chaque paroi émettrice à l'extérieur de l'enceinte, le système de sécurité comprenant au moins deux dispositifs d'acquisition d'images tournés chacun vers l'une desdites zones prédéfinie, le dispositif de traitement étant agencé pour détecter la présence ou non d'une paroi amovible dans les images acquises par lesdits dispositifs d'acquisition d'images ;
- le système de sécurité comprend en outre un dispositif d'alerte agencé pour émettre une alarme à destination d'un opérateur et/ou pour arrêter ou empêcher le fonctionnement de l'unité de traitement thermique si le dispositif de traitement détecte l'absence d'une paroi amovible dans une zone prédéfinie ;
- le dispositif d'acquisition d'images est mobile par rapport à l'enceinte et/ou comprend au moins un élément mobile de sorte que le dispositif d'acquisition d'images acquiert des images d'une pluralité de zones prédéfinies en se déplaçant par rapport à l'enceinte pour détecter la présence ou non de parois amovibles dans lesdites zones prédéfinies.

L'invention apparaîtra plus clairement à la lecture de la description qui va suivre, donnée uniquement à titre d'exemple non limitatif, et faite en référence aux dessins dans lesquels :
[Fig.1] - la [Fig.1] est une représentation schématique en perspective d'une partie d'une unité de traitement thermique selon l'invention, et
[Fig.2] - la [Fig.2] est une représentation schématique en perspective de l'unité de traitement thermique de la [Fig.1] sans les parois amovibles encloisonnant l'enceinte.

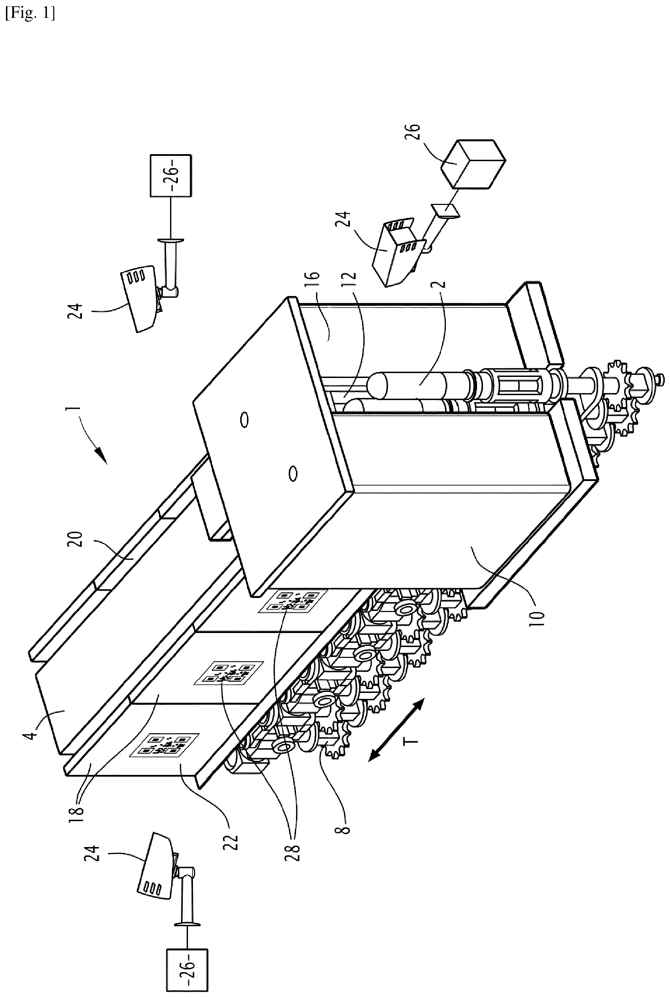

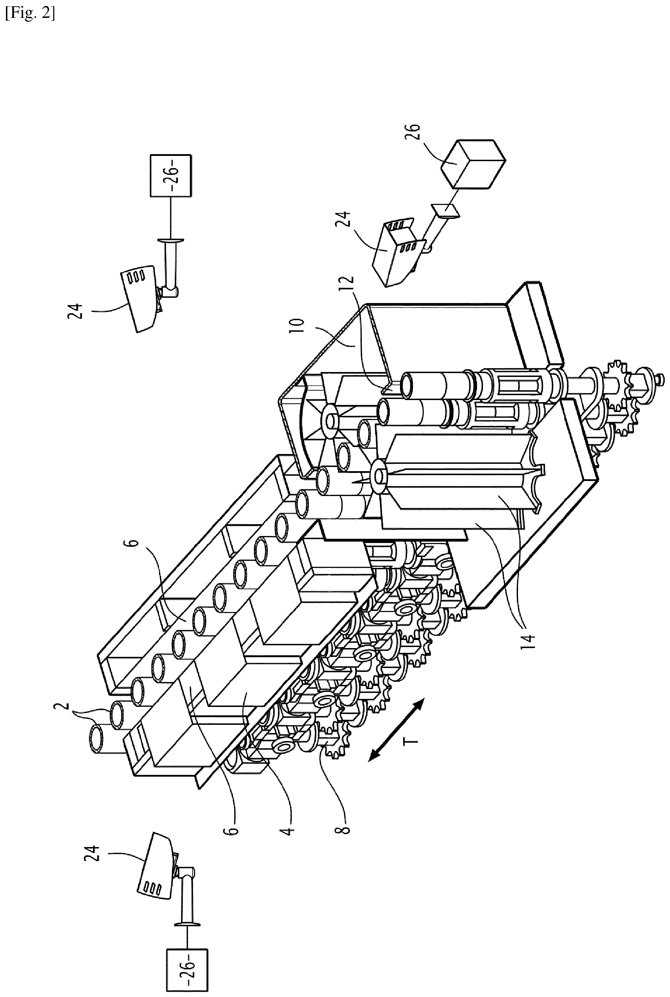

En référence aux Figs. 1 et 2, on décrit une unité de traitement thermique **1,** ou four, d'une installation de fabrication de récipients à partir de préformes **2.**

L'unité de traitement thermique comprend une enceinte **4** délimitée par deux parois **6** ([Fig.2]), dont au moins une est une paroi émettrice comprenant au moins un élément d'émission d'un rayonnement électromagnétique monochromatique ou pseudo-monochromatique. Les préformes 2 circulent au sein de l'enceinte 4 selon un trajet **T** de circulation prédéfini et définissant une direction longitudinale. Les parois 6 sont espacées l'une de l'autre selon une direction transversale sensiblement perpendiculaire à la direction longitudinale de sorte à s'étendre de part et d'autre du trajet T de circulation. Sur les Figs. 1 et 2, le trajet T a été représenté comme étant rectiligne, mais il est entendu qu'il pourrait être incurvé dans certaines configurations de l'installation de fabrication de récipients. Ainsi, en variante, les préformes 2 circulent au sein de l'enceinte 4 selon un trajet T de circulation prédéfini circulaire. L'unité de traitement thermique comprend un système de préhension et de déplacement **8** des préformes 2 selon le trajet T de circulation entre les parois 6. Les préformes 2 sont plus particulièrement maintenues de sorte que leur axe respectif s'étende selon une direction d'élévation sensiblement perpendiculaire à la direction longitudinale et à la direction transversale. En d'autres termes, la direction d'élévation correspond à la hauteur des préformes 2 et à la hauteur des parois 6. De façon connue, le système de préhension peut être agencé pour que les préformes 2 tournent autour de leur axe lorsqu'elles circulent selon le trajet T.

L'élément d'émission comprend par exemple une pluralité de sources de rayonnement électromagnétique monochromatique ou pseudo-monochromatique. Plus particulièrement, l'élément d'émission est par exemple un émetteur laser et les sources de rayonnement sont des puces laser agencées pour émettre un rayonnement laser dans le domaine de l'infrarouge selon une direction d'émission sensiblement parallèle à la direction transversale. Les sources de rayonnement sont par exemple agencées les unes à côté des autres et les unes au-dessus des autres sur un support de sorte à former des rangées de sources de rayonnement s'étendant selon la direction longitudinale.

De tels éléments d'émission sont par exemple décrits dans le document FR 3 124 030 et l'homme du métier pourra se référer à ce document pour obtenir plus de détail, notamment en ce qui concerne la structure de chaque source de rayonnement, l'agencement des sources de rayonnement sur un support, la connexion des sources de rayonnement entre elles et le refroidissement des éléments de chauffage.

La paroi 6 émettrice comprend par exemple une pluralité d'éléments d'émission tels que décrits ci-dessus, les éléments d'émission étant par exemple répartis au moins selon la direction longitudinale sur la paroi 6 et, en variante ou en complément, au moins selon la direction d'élévation sur la paroi 6.

Selon un mode de réalisation, les deux parois 6 sont des parois émettrices telles que décrites ci-dessus. Il convient de noter que chaque paroi 6 peut également comprendre des éléments réfléchissants agencés pour réfléchir le rayonnement issu des éléments d'émission de la paroi opposée. Un tel agencement d'enceinte est par exemple décrit dans le document FR 3 124 030 et l'homme du métier peut s'y référer.

Ainsi, en raison du grand nombre d'éléments d'émission et des réflexions à l'intérieur de l'enceinte, on comprend qu'un rayonnement peut facilement être émis en dehors de l'enceinte et présenter un risque pour les opérateurs évoluant autour de l'unité de traitement thermique. Le problème se pose notamment à l'entrée et à la sortie de l'enceinte 4, c'est-à-dire à l'endroit où les préformes 2 entrent et sortent de l'enceinte. En effet, l'enceinte 4 doit être ouverte dans ces zones pour laisser un passage pour les préformes 2.

Selon un mode de réalisation, il est prévu au moins un sas **10** à l'entrée et/ou à la sortie de l'enceinte 4. Comme représenté sur la [Fig.2], un tel sas 10 est disposé en aval d'une ouverture **12** permettant l'entrée des préformes 2 dans l'enceinte 4 et en amont des parois 6 émettrices et/ou en amont de l'ouverture permettant la sortie des préformes 2 de l'enceinte 4 et en aval des parois 6 émettrices, l'amont et l'aval étant défini selon le sens de circulation de préformes 2 dans l'enceinte 4. Un tel sas 10 est agencé pour limiter, voire supprimer, le rayonnement susceptible de passer par l'ouverture associée à ce sas 10 en formant un piège à rayonnement à l'intérieur du sas. A cet effet, le sas 10 est par exemple pourvu de boucliers **14** s'étendant dans le trajet T prédéfini des préformes 2 lorsqu'elles traversent le sas 10, par exemple entre les préformes 2 successives, afin de bloquer le rayonnement orienté vers l'ouverture 12. Ces boucliers sont par exemple mobiles en rotation de sorte à former des tourniquets au sein desquels doivent passer les préformes 2 avant de passer entre les parois 6 émettrices et/ou après être passées entre ces parois 6. De tels sas 10 sont par exemple décrits dans le document WO 2011/110791 de sorte qu'ils ne seront pas décrits plus en détail ici. L'homme du métier pourra se référer à ce document pour avoir plus de détails sur l'implémentation et l'agencement de tels sas 10 dans une unité de traitement thermique 1.

Comme représenté sur la [Fig.1], l'enceinte 4 de l'unité de traitement thermique 1 est en outre encloisonnée dans un carénage **16** agencé pour empêcher le rayonnement émis dans l'enceinte 4 de sortir de cette enceinte 4. Ainsi, le carénage 16 est agencé pour isoler l'enceinte 4, autant que possible, du local dans lequel est placée l'unité de traitement thermique 1 afin que des opérateurs puissent circuler autour de l'unité de traitement thermique 1 sans risque d'être exposés au rayonnement émis dans l'enceinte 4. Ainsi, le carénage 16 ferme l'enceinte 4 le long du trajet T prédéfini, au moins des deux côtés de l'enceinte 4 selon la direction transversale et au moins au-dessus de l'enceinte 4 selon la direction d'élévation Z. A cet effet, le carénage 16 s'étend le long des parois 6, du côté extérieur de celles-ci, et recouvre l'espace s'étendant entre les parois 6 ainsi que les parois 6 au-dessus de l'enceinte 4. Du côté inférieur de l'enceinte 4, le carénage 16 comprend par exemple une ouverture en forme de fente pour laisser un passage au système de préhension et de déplacement 8 des préformes 2 entre l'intérieur de l'enceinte 4 et l'extérieur. Le carénage 16 définit en outre l'ouverture 12 pour l'entrée et/ou la sortie des préformes 2 dans et hors de l'enceinte 4, c'est-à-dire que cette ou ces ouvertures 12 sont pratiquées dans le carénage. Lorsqu'un ou des sas 10 sont prévus, le carénage 16 entoure également ceux-ci, comme représenté sur la [Fig.1].

Le carénage 16 comprend au moins une paroi amovible **18** formant une partie du carénage 16. Par paroi amovible 18, on entend que la paroi amovible 18 peut être séparée de façon réversible du reste du carénage 16 et de l'enceinte 4, par exemple pour libérer un accès à l'enceinte 4 et aux éléments s'étendant dans l'enceinte 4 pour des opérations de maintenance ou autre. A cet effet, la paroi amovible 18 est par exemple montée sur un carter du carénage 16 par des éléments de fixation réversibles permettant la fixation de la paroi amovible 18 sur le carter et le démontage de la paroi amovible 18 pour la séparer du carter. La paroi amovible 18 s'étend entre une face interne **20,** tournée vers l'intérieur de l'enceinte 4 lorsque la paroi amovible 18 est montée sur le carter, et une face externe **22,** opposée à la face interne 20 et tournée vers l'extérieur de l'enceinte 4. La paroi amovible 18 est agencée pour empêcher le passage d'un rayonnement émis par les éléments d'émission de la face interne 20 à la face externe 22 de la paroi amovible 18. A cet effet, la paroi amovible 18 peut être réalisée en un matériau empêchant ce passage, par exemple en absorbant le rayonnement, ou la face interne 20 peut être revêtue d'un tel matériau. En variante, le matériau peut être un matériau réfléchissant le rayonnement. La paroi amovible 18 est par exemple conforme aux protecteurs passifs pour laser tels que définis par la norme CEI 60825-4.

La paroi amovible 18 est disposée dans une zone prédéfinie de l'enceinte 4. La zone prédéfinie correspond notamment à une zone dans laquelle le rayonnement émis par les éléments d'émission est susceptible de sortir de l'enceinte 4 en l'absence de la paroi amovible 18 et est bloqué par celle-ci lorsque la paroi amovible 18 est montée sur le reste du carénage 16. Ainsi, la zone prédéfinie s'étend par exemple à un bord de l'ouverture 12 de l'enceinte ou le long d'une partie de la paroi 6 émettrice ou en regard de celle-ci. En d'autres termes, la paroi amovible 18 définit par exemple au moins un bord de l'ouverture 12 de l'enceinte 4 et/ou s'étend en regard d'un ou plusieurs éléments d'émission selon la direction transversale.

Selon un mode de réalisation particulièrement avantageux et comme représenté sur la [Fig.1], le carénage 16 est formé d'un assemblage de parois amovibles 18, c'est-à-dire que le carénage 16 est entièrement démontable. Chaque paroi amovible 18 est disposée dans une zone prédéfinie de l'enceinte 4 et leur assemblage permet de fermer complètement l'enceinte 4 en dehors des zones dans laquelle l'enceinte 4 doit être ouverte comme décrit précédemment. On comprend ainsi que lorsque toutes les parois amovibles 18 sont montées sur l'enceinte 4, les fuites de rayonnement ne sont susceptibles de se produire qu'au niveau des ouvertures prévues dans l'enceinte 4 et que l'enceinte 4 peut être pourvue d'éléments pour réduire ces risques de fuite au niveau des ouvertures, tels que les sas 10 décrits précédemment. On comprend également que l'absence d'une paroi amovible 18 dans la zone prédéfinie correspondante peut entraîner une fuite de rayonnement au niveau de cette zone prédéfinie et entrainer un risque pour les opérateurs évoluant en regard de cette zone prédéfinie ou pour les équipements placés en regard de cette zone prédéfinie lorsque l'unité de traitement thermique est en marche.

Si l'on considère le cas où l'unité de traitement thermique 1 comprend une seule paroi amovible 18, afin de s'assurer de la présence de cette paroi amovible 18 sur l'enceinte 4, l'unité de traitement thermique selon l'invention comprend un système de sécurité comprenant au moins un dispositif d'acquisition d'images **24** tourné vers la zone prédéfinie dans laquelle cette paroi amovible 18 doit s'étendre et agencé pour acquérir au moins une image d'au moins cette zone prédéfinie. Le système de sécurité comprend en outre un dispositif de traitement **26** des images acquises par le dispositif d'acquisition d'images 24 agencé pour détecter la présence ou non de la paroi amovible 18 dans l'image acquise de la zone prédéfinie. Ainsi, le système de sécurité permet de vérifier que la paroi amovible 18 est bien en place par exemple avant toute mise en marche de l'unité de traitement thermique 1. Selon un mode de réalisation, le système de sécurité comprend en outre un dispositif d'alerte agencé pour émettre une alarme à destination d'un opérateur et/ou pour arrêter ou empêcher le fonctionnement de l'unité de traitement thermique si le dispositif de traitement détecte l'absence de la paroi amovible 18 dans une zone prédéfinie. De la sorte, on s'assure que l'unité de traitement thermique ne fonctionne que lorsque la paroi amovible 18 a bien été mise en place.

Le dispositif d'acquisition d'images 24 est de préférence agencé à l'extérieur de l'enceinte 4 et acquiert des images de la face externe 22 de la paroi amovible 18, comme représenté sur la [Fig.1].

Le dispositif d'acquisition d'images 24 comprend par exemple au moins une caméra captant des images au moins dans le domaine du visible, la caméra étant orientée de sorte qu'au moins la zone prédéfinie s'étend dans le cadre de la caméra. Selon un mode de réalisation, la caméra est en outre agencée pour capter des images dans le domaine du proche infrarouge de sorte que les images captées par la caméra peuvent montrer la présence d'un rayonnement émis dans la zone prédéfinie hors de l'enceinte 4. Par proche infrarouge, on entend une longueur d'onde sensiblement comprise entre 0.7 µm et 1.6 µm. Ainsi, le dispositif de traitement des images acquises peut permettre de déterminer la présence d'une fuite d'un rayonnement hors de l'enceinte 4 en analysant les images captées par la caméra. Un tel mode de réalisation est particulièrement avantageux lorsque la caméra est agencée pour capter des images autour de l'ouverture 12 d'entrée et/ou de sortie des préformes 2 dans ou hors de l'enceinte 4, là où les risques de fuite sont les plus importants. Cependant, ce mode de réalisation reste avantageux pour d'autres zones prédéfinies, notamment pour détecter si une paroi amovible 18 est endommagée et laisse passer un rayonnement de la face interne 20 à la face externe 22. Le dispositif d'alerte peut alors être agencé pour émettre une alarme à destination d'un opérateur et/ou pour arrêter ou empêcher le fonctionnement de l'unité de traitement thermique si le dispositif de traitement détecte la présence d'une fuite dans une zone prédéfinie. A titre d'exemple, l'intervention du dispositif d'alerte peut être déclenchée lorsque le niveau de rayonnement détecté excède l'exposition maximale permise (EMP) telle que définie dans la norme CEI 60825-1 et/ou la limite d'exposition protégée (LEP) telle que définie dans la norme CEI 60825-4.

Selon un mode de réalisation lorsque l'unité de traitement thermique 1 comprend plusieurs parois amovibles 18, notamment des parois amovibles 18 adjacentes les unes aux autres, le dispositif d'acquisition d'images 24 est agencé pour acquérir une ou plusieurs images de plusieurs parois amovibles 18, par exemple en prévoyant que le cadre de la caméra englobe plusieurs zones prédéfinies de sorte que l'acquisition d'une seule image par la caméra permet de détecter la présence ou non de toutes ces parois amovibles 18. En variante ou en complément, le dispositif d'acquisition d'images 24 est mobile par rapport à l'enceinte 4 et/ou comprend une partie mobile, telle qu'un miroir, de sorte que le dispositif d'acquisition d'images peut acquérir des images d'une pluralité de zones prédéfinies pour détecter la présence ou non de parois amovibles 18 dans ces zones prédéfinies. Le dispositif d'acquisition d'images 24 est ainsi par exemple mobile en rotation de sorte à balayer plusieurs zones prédéfinies et à acquérir au moins une image pour chacune de ces zones prédéfinies. Le dispositif de traitement 26 est alors configuré pour déterminer dans chaque image la présence ou non d'une paroi amovible 18 dans chacune des zones prédéfinies.

Si nécessaire pour obtenir des images de chaque paroi amovible 18 du carénage 16, le système de sécurité peut comprendre plusieurs dispositifs d'acquisition d'images 24, comme représenté sur la [Fig.1]. Ainsi, à titre d'exemple, au moins un dispositif d'acquisition d'images 24 peut être prévu pour chaque paroi émettrice 6. Selon le mode de réalisation représenté sur les [Fig.1], un dispositif d'acquisition d'images 24 est en outre disposé en regard de l'ouverture 12, ce qui est particulièrement avantageux lorsque les images acquises sont également utilisées pour détecter une fuite de rayonnement par cette ouverture 12.

Le dispositif de traitement 26 d'image est par exemple configuré pour comparer la ou les images acquises avec une image dans laquelle la ou les parois amovibles 18, correspondant à la ou aux zones prédéfinies dont les images sont acquises par le dispositif d'acquisition d'images 24, sont toutes présentes. Ainsi, le dispositif de traitement d'images permet de déterminer de façon simple si une paroi amovible 18 n'est pas présente dans une image dès lors qu'il y a une différence entre l'image traitée et l'image dans laquelle toutes les parois amovibles 18 sont présentes.

En variante ou en complément, chaque paroi amovible 18 peut comprendre au moins un élément d'identification 28, dont l'image est acquise par le dispositif d'acquisition d'images 24 au cours de la vérification de la présence de la paroi amovible 18. Le dispositif de traitement 26 d'image est alors configuré pour détecter la présence ou non de l'élément d'identification 28 dans l'image acquise par le dispositif d'acquisition d'images 24 afin de déterminer si la paroi amovible 18 est présente dans la zone prédéfinie. La détection de l'élément d'identification 28 peut permettre, en plus de vérifier la présence ou non de la paroi amovible 18, de déterminer si la paroi amovible 18 détectée est bien celle qui doit être placée dans la zone prédéfinie dont l'image a été acquise. En effet, l'élément d'identification 28 permet de rendre chaque paroi amovible 18 distincte des autres et d'associer de façon individuelle une paroi amovible 18 à une zone prédéterminée. La détection de l'élément d'identification 28 peut être faite en plus de la comparaison d'images décrite précédemment en remplacement de celle-ci, le repérage de l'élément d'identification dans une image pouvant être réalisé de façon plus simple que la comparaison d'images, notamment d'un point de vue logiciel. L'élément d'identification 28 est par exemple formé par un QR code, comme représenté sur la [Fig.1], ou par tout autre élément d'identification approprié, tel qu'un code barre ou autre. Selon le mode de réalisation représenté sur la [Fig.1], l'élément d'identification 28 est appliqué sur la face externe 22 de la paroi amovible 18 lorsque le dispositif d'acquisition d'images 24 est agencé à l'extérieur de l'enceinte.

Sur les figures, chaque dispositif d'acquisition d'images 24 est associé avec un dispositif de traitement 26 d'image. Il est cependant entendu qu'un même dispositif de traitement 26 d'image peut être utilisé pour plusieurs dispositifs d'acquisition d'images 24. En variante, les dispositifs d'acquisition d'images 24 et de traitement 26 d'image peuvent être fusionnés pour faire partie d'un même système, par exemple à l'intérieur d'un même boîtier.

Comme indiqué précédemment, la détection de la présence des parois amovibles est par exemple déclenchée avant tout démarrage ou redémarrage de l'unité de traitement thermique 1 et ce démarrage ou redémarrage est empêché dès lors qu'il est déterminé qu'au moins une paroi amovible 18 n'est pas mise en place.

## Revendications

1. Unité de traitement thermique (1) de préformes (2) d'une installation de fabrication de récipients, ladite unité de traitement thermique comprenant une enceinte (4) au sein de laquelle défilent les préformes (2) selon un trajet (T) prédéfini et au moins une paroi (6) émettrice comprenant au moins un élément d'émission d'un rayonnement électromagnétique monochromatique ou pseudo-monochromatique agencé pour émettre ledit rayonnement vers les préformes (2) circulant dans l'enceinte (4), ladite enceinte (4) étant fermée au moins en partie par au moins une paroi amovible (18) agencée pour empêcher ledit rayonnement de traverser ladite paroi amovible vers l'extérieur de l'enceinte (4), ladite paroi amovible (18) étant disposée dans une zone prédéfinie de l'enceinte (4), l'unité de traitement thermique étant **caractérisée en ce qu'**elle comprend en outre au moins un système de sécurité comprenant au moins un dispositif d'acquisition d'images (24) tourné vers ladite zone prédéfinie et au moins un dispositif de traitement des images (26) acquises par ledit dispositif d'acquisition d'images (24), ledit dispositif d'acquisition d'images (24) étant agencé pour acquérir au moins une image de ladite zone prédéfinie et le dispositif de traitement (26) étant configuré pour détecter la présence ou non de ladite paroi amovible (18) dans ladite image acquise.

2. Unité de traitement thermique selon la revendication 1, dans laquelle la paroi amovible (18) comprend au moins un élément d'identification (28), le dispositif d'acquisition d'images (24) étant agencé pour acquérir au moins une image dudit élément d'identification (28), ledit dispositif de traitement (26) étant configuré pour détecter la présence dudit élément d'identification (28) dans ladite image acquise.

3. Unité de traitement thermique selon la revendication 1 ou 2, dans laquelle le dispositif d'acquisition d'images (24) comprend au moins une caméra captant des images au moins dans le domaine du visible, ladite caméra étant orientée de sorte qu'au moins la zone prédéfinie s'étend dans le cadre de ladite caméra.

4. Unité de traitement thermique selon l'une quelconque des revendications 1 à 3, dans laquelle l'enceinte (4) est fermée au moins en partie par une pluralité de parois amovibles (18) adjacentes, chaque paroi amovible (18) s'étendant dans une zone prédéfinie, le dispositif d'acquisition d'images étant agencé pour acquérir au moins une image de l'ensemble desdites zones prédéfinies de sorte que le dispositif de traitement (26) détecte la présence ou non de tous lesdites parois amovibles (18) à partir d'au moins une seule image acquise par ledit dispositif d'acquisition d'images (24).

5. Unité de traitement thermique selon l'une quelconque des revendications 1 à 4, dans laquelle ledit dispositif d'acquisition d'images (24) acquiert en outre des images dans le domaine du proche infrarouge, les images acquises par ledit dispositif d'acquisition d'images (24) étant aptes à montrer un rayonnement émis dans la zone prédéfinie, le dispositif de traitement (26) étant agencé pour identifier la présence d'une fuite de rayonnement hors de l'enceinte (4) si au moins une image acquise par ledit dispositif d'acquisition d'images (24) montre un rayonnement émis dans la zone prédéfinie.

6. Unité de traitement thermique selon l'une quelconque des revendications 1 à 5, comprenant en outre au moins une ouverture (12) d'accès à l'enceinte (4) pour le passage des préformes (2) dans ou hors de l'enceinte (4), au moins une paroi amovible (18) délimitant au moins une partie de l'ouverture (12).

7. Unité de traitement thermique selon l'une quelconque des revendications 1 à 6, dans laquelle au moins une paroi amovible (18) s'étend en regard d'un élément d'émission selon une direction transversale sensiblement perpendiculaire à la direction longitudinale.

8. Unité de traitement thermique selon l'une quelconque des revendications 1 à 7, dans laquelle l'enceinte (4) est délimitée selon une direction transversale sensiblement perpendiculaire à la direction longitudinale par deux parois (6) émettrices s'étendant de part et d'autre du trajet (T) prédéfini des préformes (2), chaque paroi (6) émettrice comprenant au moins au moins un élément d'émission d'un rayonnement électromagnétique monochromatique ou pseudo-monochromatique agencé pour émettre ledit rayonnement vers les préformes (2) circulant dans l'enceinte (4), au moins une paroi amovible (18) s'étendant dans une zone prédéfinie sur chaque paroi (6) émettrice à l'extérieur de l'enceinte (4), le système de sécurité comprenant au moins deux dispositifs d'acquisition d'images (24) tournés chacun vers l'une desdites zones prédéfinie, le dispositif de traitement (26) étant agencé pour détecter la présence ou non d'une paroi amovible (18) dans les images acquises par lesdits dispositifs d'acquisition d'images (24).

9. Unité de traitement thermique selon l'une quelconque des revendications 1 à 8, dans laquelle le système de sécurité comprend en outre un dispositif d'alerte agencé pour émettre une alarme à destination d'un opérateur et/ou pour arrêter ou empêcher le fonctionnement de l'unité de traitement thermique si le dispositif de traitement détecte l'absence d'une paroi amovible (18) dans une zone prédéfinie.

10. Unité de traitement thermique selon l'une quelconque des revendications 1 à 9, dans laquelle le dispositif d'acquisition d'images (24) est mobile par rapport à l'enceinte et/ou comprend au moins un élément mobile de sorte que le dispositif d'acquisition d'images (24) acquiert des images d'une pluralité de zones prédéfinies en se déplaçant par rapport à l'enceinte (4) pour détecter la présence ou non de parois amovibles (18) dans lesdites zones prédéfinies.

## Patentansprüche

1. Wärmebehandlungseinheit (1) für Vorformlinge (2) einer Behälterherstellungsanlage, wobei die Wärmebehandlungseinheit eine Kammer (4) umfasst, in der die Vorformlinge (2) entlang einer vorgegebenen Bahn (T) durchlaufen, und mindestens eine emittierende Wand (6), die mindestens ein Emissionselement einer monochromatischen oder pseudo-monochromatischen elektromagnetischen Strahlung umfasst, das dazu eingerichtet ist, die Strahlung zu den in der Kammer (4) zirkulierenden Vorformlingen (2) hin zu emittieren, wobei die Kammer (4) mindestens teilweise durch mindestens eine abnehmbare Wand (18) geschlossen wird, die dazu eingerichtet ist, die Strahlung daran zu hindern, die abnehmbare Wand zum Außenraum der Kammer (4) hin zu durchdringen, wobei die abnehmbare Wand (18) in einem vorgegebenen Bereich der Kammer (4) angeordnet ist, wobei die Wärmebehandlungseinheit **dadurch gekennzeichnet ist, dass** sie ferner mindestens ein Sicherheitssystem umfasst, das mindestens eine zu dem vorgegebenen Bereich hin gewandte Bilderfassungsvorrichtung (24) und mindestens eine Verarbeitungsvorrichtung (26) für die von der Bilderfassungsvorrichtung (24) erfassten Bilder umfasst, wobei die Bilderfassungsvorrichtung (24) dazu eingerichtet ist, mindestens ein Bild des vorgegebenen Bereichs zu erfassen, und wobei die Verarbeitungsvorrichtung (26) dazu ausgestaltet ist, das Vorhandensein oder nicht der abnehmbaren Wand (18) in dem erfassten Bild zu detektieren.

2. Wärmebehandlungseinheit nach Anspruch 1, wobei die abnehmbare Wand (18) mindestens ein Identifikationselement (28) umfasst, wobei die Bilderfassungsvorrichtung (24) dazu eingerichtet ist, mindestens ein Bild des Identifikationselements (28) zu erfassen, wobei die Verarbeitungsvorrichtung (26) dazu ausgestaltet ist, das Vorhandensein des Identifikationselements (28) in dem erfassten Bild zu detektieren.

3. Wärmebehandlungseinheit nach Anspruch 1 oder 2, wobei die Bilderfassungsvorrichtung (24) mindestens eine Kamera umfasst, die Bilder mindestens im sichtbaren Bereich aufnimmt, wobei die Kamera so ausgerichtet ist, dass sich mindestens der vorgegebene Bereich in dem Rahmen der Kamera erstreckt.

4. Wärmebehandlungseinheit nach einem der Ansprüche 1 bis 3, wobei die Kammer (4) mindestens teilweise durch eine Mehrzahl von benachbarten abnehmbaren Wänden (18) geschlossen wird, wobei sich jede abnehmbare Wand (18) in einem vorgegebenen Bereich erstreckt, wobei die Bilderfassungsvorrichtung dazu eingerichtet ist, mindestens ein Bild der Gesamtheit der vorgegebenen Bereiche zu erfassen, so dass die Verarbeitungsvorrichtung (26) das Vorhandensein oder nicht aller abnehmbaren Wände (18) anhand mindestens eines einzigen von der Bilderfassungsvorrichtung (24) erfassten Bildes detektiert.

5. Wärmebehandlungseinheit nach einem der Ansprüche 1 bis 4, wobei die Bilderfassungsvorrichtung (24) ferner Bilder im Bereich des nahen Infrarots erfasst, wobei die von der Bilderfassungsvorrichtung (24) erfassten Bilder geeignet sind, eine in dem vorgegebenen Bereich emittierte Strahlung zu zeigen, wobei die Verarbeitungsvorrichtung (26) dazu eingerichtet ist, das Vorhandensein eines Entweichens von Strahlung aus der Kammer (4) heraus zu identifizieren, wenn mindestens ein von der Bilderfassungsvorrichtung (24) erfasstes Bild eine in dem vorgegebenen Bereich emittierte Strahlung zeigt.

6. Wärmebehandlungseinheit nach einem der Ansprüche 1 bis 5, umfassend ferner mindestens eine Zugangsöffnung (12) zu der Kammer (4) zum Durchführen der Vorformling (2) in die oder aus der Kammer (4), wobei mindestens eine abnehmbare Wand (18) mindestens einen Teil der Öffnung (12) begrenzt.

7. Wärmebehandlungseinheit nach einem der Ansprüche 1 bis 6, wobei sich mindestens eine abnehmbare Wand (18) gegenüber einem Emissionselement entlang einer im Wesentlichen senkrecht zur Längsrichtung verlaufenden Querrichtung erstreckt.

8. Wärmebehandlungseinheit nach einem der Ansprüche 1 bis 7, wobei die Kammer (4) entlang einer im Wesentlichen senkrecht zur Längsrichtung verlaufenden Querrichtung durch zwei emittierende Wände (6) begrenzt wird, die sich beidseits der vorgegebenen Bahn (T) der Vorformlinge (2) erstrecken, wobei jede emittierende Wand (6) mindestens ein Emissionselement einer monochromatischen oder pseudo-monochromatischen elektromagnetischen Strahlung umfasst, das dazu eingerichtet ist, die Strahlung zu den in der Kammer (4) zirkulierenden Vorformlingen (2) hin zu emittieren, wobei sich mindestens eine abnehmbare Wand (18) in einem vorgegebenen Bereich an jeder emittierenden Wand (6) außerhalb der Kammer (4) erstreckt, wobei das Sicherheitssystem mindestens zwei Bilderfassungsvorrichtungen (24) umfasst, von denen jede zu einem der vorgegebenen Bereiche hin gewandt ist, wobei die Verarbeitungsvorrichtung (26) dazu eingerichtet ist, das Vorhandensein oder nicht einer abnehmbaren Wand (18) in den von den Bilderfassungsvorrichtungen (24) erfassten Bildern zu detektieren.

9. Wärmebehandlungseinheit nach einem der Ansprüche 1 bis 8, wobei das Sicherheitssystem ferner eine Warnvorrichtung umfasst, die dazu eingerichtet einen Alarm an eine Bedienperson auszugeben und/oder den Betrieb der Wärmebehandlungseinheit zu stoppen oder zu verhindern, wenn die Verarbeitungsvorrichtung das Fehlen einer abnehmbaren Wand (18) in einem vorgegebenen Bereich detektiert.

10. Wärmebehandlungseinheit nach einem der Ansprüche 1 bis 9, wobei die Bilderfassungsvorrichtung (24) in Bezug auf die Kammer beweglich ist und/oder mindestens ein bewegliches Element umfasst, so dass die Bilderfassungsvorrichtung (24) Bilder einer Mehrzahl von vorgegebenen Bereichen erfasst, indem sie sich in Bezug auf die Kammer (4) bewegt, um das Vorhandensein oder nicht von abnehmbaren Wänden (18) in den vorgegebenen Bereichen zu detektieren.

## Claims

1. Heat treatment unit (1) for preforms (2) of a container manufacturing plant, said heat treatment unit comprising an enclosure (4) within which the preforms (2) travel along a predefined path (T) and at least one emitting wall (6) comprising at least one monochromatic or pseudo-monochromatic electromagnetic radiation emitting element arranged to emit said radiation towards the preforms (2) circulating in the enclosure (4), said enclosure (4) being closed at least in part by at least one removable wall (18) arranged to prevent said radiation from passing through said removable wall towards the outside of the enclosure (4), said removable wall (18) being arranged in a predefined zone of the enclosure (4), the heat treatment unit being **characterized in that** it further comprises at least one safety system comprising at least one image acquisition device (24) facing towards said predefined zone and at least one image processing device (26) processing the images acquired by said image acquisition device (24), said image acquisition device (24) being arranged to acquire at least one image of said predefined zone and the processing device (26) being configured to detect the presence or non-presence of said removable wall (18) in said acquired image.

2. Heat treatment unit according to Claim 1, wherein the removable wall (18) comprises at least one identification element (28), the image acquisition device (24) being arranged to acquire at least one image of said identification element (28), said processing device (26) being configured to detect the presence of said identification element (28) in said acquired image.

3. Heat treatment unit according to Claim 1 or 2, wherein the image acquisition device (24) comprises at least one camera capturing images at least in the visible domain, said camera being oriented such that at least the predefined zone extends within the frame of said camera.

4. Heat treatment unit according to any one of Claims 1 to 3, wherein the enclosure (4) is closed at least in part by a plurality of adjacent removable walls (18), each removable wall (18) extending in a predefined zone, the image acquisition device being arranged to acquire at least one image of all said predefined zones so that the processing device (26) detects the presence or non-presence of all said removable walls (18) using the at least one single image acquired by said image acquisition device (24).

5. Heat treatment unit according to any one of Claims 1 to 4, wherein said image acquisition device (24) further acquires images in the near infrared domain, the images acquired by said image acquisition device (24) being able to show radiation emitted in the predefined zone, the processing device (26) being arranged to identify the presence of a radiation leak out of the enclosure (4) if at least one image acquired by said image acquisition device (24) shows radiation emitted in the predefined zone.

6. Heat treatment unit according to any one of Claims 1 to 5, further comprising at least one access opening (12) providing access to the enclosure (4) for the passage of the preforms (2) into or out of the enclosure (4), at least one removable wall (18) delimiting at least part of the opening (12).

7. Heat treatment unit according to any one of Claims 1 to 6, wherein at least one removable wall (18) extends facing an emitting element in a transverse direction substantially perpendicular to the longitudinal direction.

8. Heat treatment unit according to any one of Claims 1 to 7, wherein the enclosure (4) is delimited in a transverse direction substantially perpendicular to the longitudinal direction by two emitting walls (6) extending one on each side of the predefined path (T) of the preforms (2), each emitting wall (6) comprising at least one monochromatic or pseudo-monochromatic electromagnetic radiation emitting element arranged to emit said radiation towards the preforms (2) circulating in the enclosure (4), at least one removable wall (18) extending in a predefined zone on each emitting wall (6) outside the enclosure (4), the safety system comprising at least two image acquisition devices (24) each facing towards one of said predefined zones, the processing device (26) being arranged to detect the presence or non-presence of a removable wall (18) in the images acquired by said image acquisition devices (24).

9. Heat treatment unit according to any one of Claims 1 to 8, wherein the safety system further comprises an alert device arranged to emit an alarm destined for an operator and/or to stop or prevent the operation of the heat treatment unit if the processing device detects the absence of a removable wall (18) in a predefined zone.

10. Heat treatment unit according to any one of Claims 1 to 9, wherein the image acquisition device (24) is movable relative to the enclosure and/or comprises at least one movable member such that the image acquisition device (24) acquires images of a plurality of predefined zones by moving relative to the enclosure (4) so as to detect the presence or non-presence of removable walls (18) in said predefined zones.
